# DEMANDE DE BREVET EUROPEEN

(11) **EP 1 657 045 A1**
(43) Date de publication de la demande: **17.05.2006**
(21) Numéro de dépôt: 05292394.3
(22) Date de dépôt: 10.11.2005
(51) Int. Cl.: B29C 45/14

(54) **Procédé pour réaliser une pièce en matière thermoplastique nervurée recouverte d'une feuille conductrice, pièce nervurée**

(30) Priorité: 10.11.2004 FR 0411988
(71) Demandeur: COMPAGNIE PLASTIC OMNIUM, 69007 Lyon (FR)
(72) Inventeur: Grando, Jérôme, 38390 Vertrieu (FR)
(74) Mandataire: Remy, Vincent Noel Paul

(57) **Abrégé**

L'invention concerne un procédé pour réaliser une pièce (2) en matière thermoplastique recouverte en surface d'une feuille (4) électriquement conductrice d'épaisseur inférieure à 0,1 millimètre et comprenant au moins une nervure (6), comprenant une étape de dépôt, sur une surface interne d'un moule définissant la forme de la pièce (2), de la feuille (4) électriquement conductrice de manière à recouvrir au moins partiellement un orifice borgne du moule débouchant sur la surface interne et définissant la forme de la nervure (6), une étape d'aménagement dans la feuille (4) d'au moins une ouverture (14) de l'orifice conformée pour permettre à de la matière thermoplastique fluide de la traverser, et pour que la feuille (4) soit connexe, et une étape de remplissage du moule de matière thermoplastique fluide

## Description

### Domaine technique

Les pièces en matière thermoplastique recouvertes en surface d'une feuille électriquement conductrice et comprenant au moins une nervure.

### Etat de la technique

Les constructeurs automobiles souhaitent tirer profit de la vaste surface externe constituée par la carrosserie d'un véhicule pour disposer des éléments rayonnants comme un capteur ou une antenne. Dans ce but, il est connu de surmouler une feuille électriquement conductrice, par exemple en aluminium, par de la matière thermoplastique pour obtenir une peau de pare-choc ou un convergent intégrant un élément rayonnant. On utilise une feuille d'aluminium dont l'épaisseur est inférieure à 0,1 millimètre, par exemple une feuille d'aluminium alimentaire d'épaisseur sensiblement égale à 0,07 millimètre. On parle généralement de feuille d'aluminium lorsque son épaisseur est inférieure à 0,15 millimètre et de plaque ou tôle d'aluminium lorsque son épaisseur est supérieure à 0,15 millimètre.

Le surmoulage est classiquement réalisé par dépôt d'une feuille électriquement conductrice sur une surface interne d'un moule définissant la forme de la peau ou du convergent. Pour des raisons esthétiques et pour protéger l'élément rayonnant, la feuille conductrice doit se trouver sur la face interne de la pièce. Mais ces deux pièces de carrosserie ne comportent généralement pas de nervures.

### Problème posé par cet état de la technique

Etant donné qu'une pièce de carrosserie en matière thermoplastique est assez souple, il n'est pas rare qu'elle doive être rigidifiée par des nervures disposées sur sa surface interne.

Cependant, le procédé connu de surmoulage de feuille d'aluminium ne peut pas être mis en oeuvre pour une pièce comportant des nervures sur sa face interne.

En effet, pour obtenir une pièce comprenant une nervure sur sa face interne, le moule de la pièce comporte classiquement un orifice borgne débouchant sur la face du moule délimitant la face interne de la pièce.

Si l'on souhaitait fabriquer une pièce nervurée recouverte d'une feuille conductrice en reproduisant le procédé utilisé pour la fabrication d'une pièce non-nervurée, l'orifice borgne serait recouvert par la feuille conductrice déposée sur la face du moule délimitant la surface interne de la pièce.

On injecterait ensuite de la matière thermoplastique sous pression dans le moule. La matière thermoplastique se répartirait alors dans tout le moule et en particulier dans l'orifice borgne, si bien que, sous l'effet de la pression, elle déchirerait la feuille conductrice recouvrant l'orifice. En effet, du fait de sa finesse, la feuille ne résiste pas à la pression de matière thermoplastique à la différence d'une plaque ou d'une tôle qui est plus résistante.

On obtiendrait alors une pièce en matière thermoplastique recouverte en surface par une feuille conductrice interrompue localement au niveau de la nervure. La conduction électrique de la feuille conductrice serait donc interrompue au niveau de la nervure.

Par conséquent, il existe des contre-indications à utiliser le surmoulage pour la fabrication d'une pièce nervurée recouverte d'une feuille conductrice. C'est pourquoi ce procédé a jusqu'à présent été écarté par l'homme du métier.

Puisque le surmoulage classique d'une feuille conductrice ne peut pas être pratiqué dans le cas d'une pièce nervurée, on peut utiliser un procédé différent, dans lequel la feuille conductrice est rapportée. On moule au préalable la pièce en matière thermoplastique, puis on la recouvre d'une feuille conductrice, en prenant soin que la feuille recouvre les nervures.

Ce procédé augmente les quantités de matériau conducteur utilisé sans pour autant améliorer les performances du capteur ou de l'antenne. De plus, la pose de la feuille conductrice est compliquée du fait des angles de la nervure. Par ailleurs, le procédé nécessite de modifier les dimensions du moule utilisé pour tenir compte de l'épaisseur de la feuille ce qui n'est pas nécessaire avec les techniques de surmoulage.

Le procédé connu de fabrication d'une pièce nervurée en matière thermoplastique recouverte d'une feuille conductrice présente donc de nombreux inconvénients.

L'invention vise à proposer un procédé d'obtention d'une pièce nervurée en matière thermoplastique recouverte d'une feuille conductrice qui ne présente aucun des inconvénients précités.

### Solution proposée par l'invention

On dépose, sur une surface interne d'un moule définissant la forme de la pièce, une feuille connexe électriquement conductrice d'épaisseur inférieure à 0,1 millimètre de manière à recouvrir au moins partiellement un orifice borgne du moule débouchant sur la surface interne et définissant la forme d'une nervure.

On ménage dans la feuille au moins une ouverture de l'orifice conformée pour permettre à de la matière thermoplastique fluide de traverser l'ouverture, et pour que la feuille demeure connexe.

On remplit le moule de matière thermoplastique fluide.

Les inventeurs ont constaté que si les ouvertures sont suffisamment grandes, le remplissage du moule par de la matière thermoplastique ne déchire pas la feuille. La feuille reste donc connexe une fois la pièce finale obtenue et la conduction électrique est assurée sur toute la surface de la feuille.

La pièce en matière thermoplastique obtenue comprend une surface externe et au moins une nervure en saillie de la surface, la base de la nervure étant sensiblement allongée et s'étendant selon une direction longitudinale. De plus, la surface externe est recouverte par une feuille électriquement conductrice connexe d'épaisseur inférieure à 0,1 millimètre et comprenant, d'une part, deux parties situées de part et d'autre de la base de la nervure, et d'autre part, au moins un pont de matière traversant la base de la nervure selon une direction sensiblement transversale.

### Mode de réalisation particulier

- On remplit le moule par injection de matière thermoplastique en fusion.
- On injecte la matière thermoplastique en fusion à proximité de la nervure. De cette manière, on contrôle plus précisément la pression de la matière plastique à proximité de la nervure.
- On met en oeuvre en outre une étape de compression du moule.
- On ménage l'ouverture par perforation de la feuille.
- On réalise des perforations de la feuille régulièrement réparties à l'embouchure de l'orifice. Une répartition régulière permet d'éviter qu'un pont de matière entre deux perforations ne subisse une trop grande pression et ne cède.
- La surface de l'ouverture est d'au moins 10 mm² pour permettre à de la matière thermoplastique de s'écouler au travers.
- L'ouverture de l'orifice ménagée dans la feuille est conformée de sorte que la feuille recouvre au moins partiellement l'orifice.
- L'ouverture de l'orifice ménagée dans la feuille est conformée de sorte que la surface de la zone de l'orifice recouverte par la feuille est supérieure à la surface de la zone de l'orifice qui n'est pas recouverte par la feuille. Cela permet de minimiser les perturbations de la conductivité électrique de la feuille engendrées par l'ouverture ménagée dans la feuille.
- La pièce forme l'une quelconque des pièces de véhicule automobile de l'ensemble constitué par une peau de pare-choc, un renfort de peau, un absorbeur de choc, une doublure d'aile, un convergent, un déflecteur, une face avant technique, un spoiler, un hayon et son caisson, un pavillon, un capot, un rétroviseur, un passage de roue.
- La feuille est en aluminium.

### Description d'un exemple

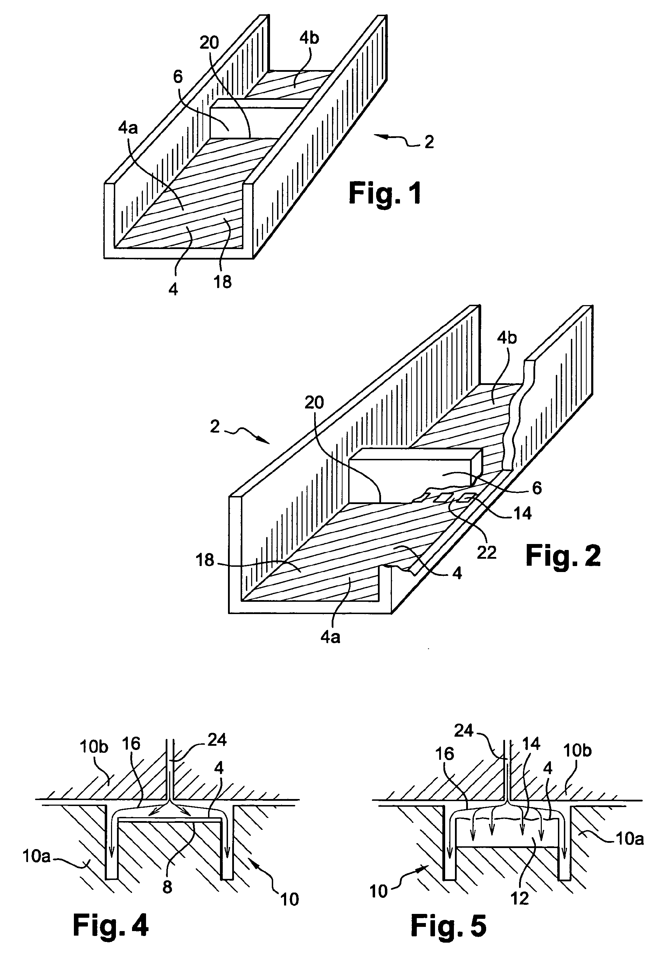

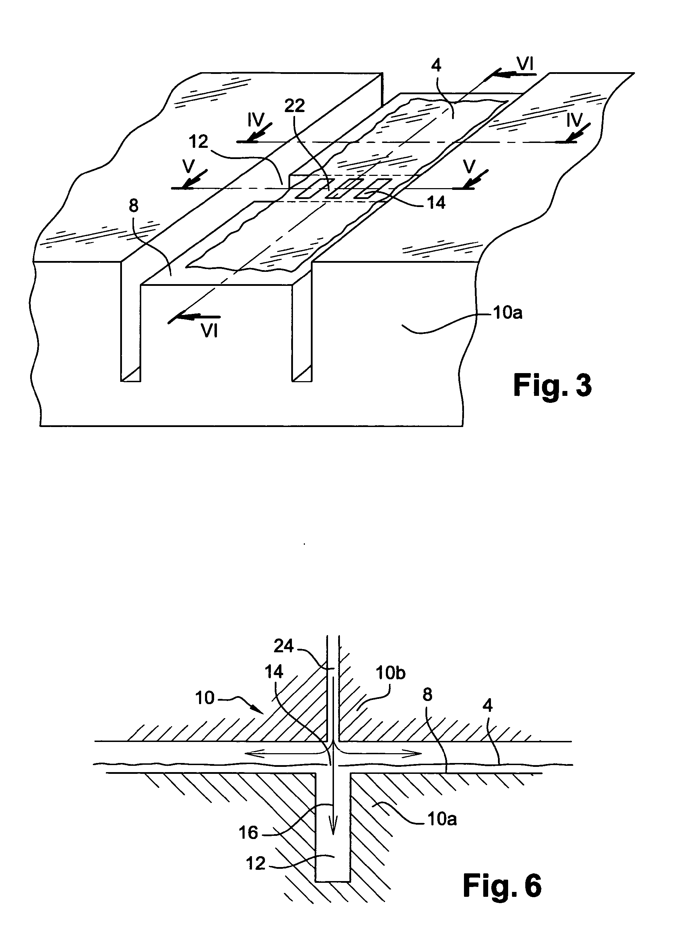

Un exemple de mise en oeuvre de l'invention est illustré par les figures 1 à 6, qui ne présentent aucun caractère limitatif de la portée de l'invention.
La figure 1 est une vue en perspective d'une poutre nervurée en matière thermoplastique selon l'invention.
La figure 2 est un arraché partiel de la poutre de la figure 1, permettant d'observer les ponts de matière de la feuille conductrice, traversant la base de la nervure
La figure 3 est une vue en perspective d'une partie d'un moule utilisé pour obtenir la poutre de la figure 1.
La figure 4 est une vue selon une coupe transversale du moule de la figure 3.
La figure 5 est une vue similaire à celle de la figure 4, prise au niveau de la nervure.
La figure 6 est une vue selon une coupe longitudinale du moule de la figure 3.

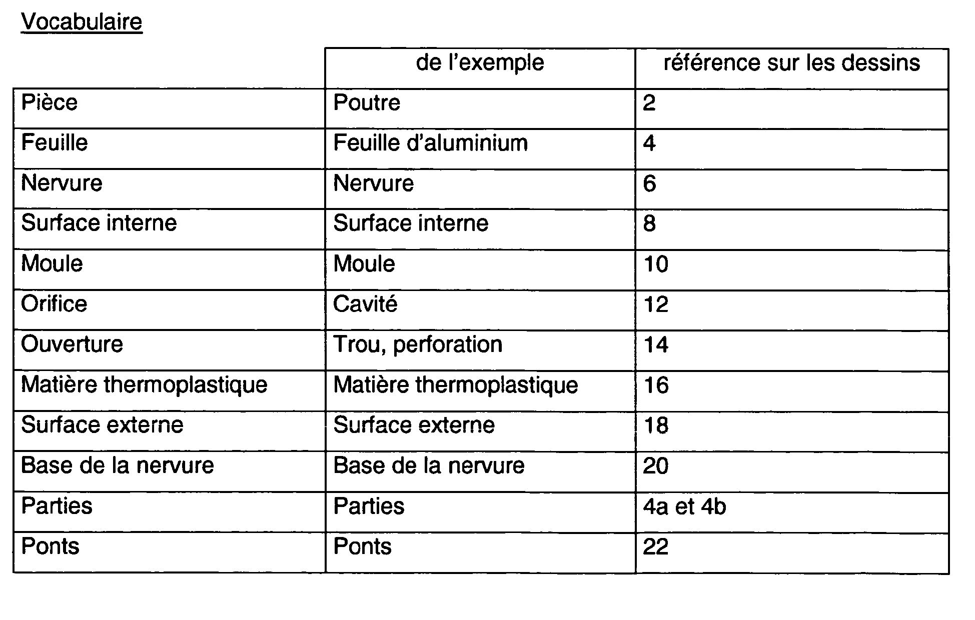

**Détail des exemples**

| Référence | Explication |
|---|---|
| 10a et 10b | Parties formant le moule 10 |
| 24 | Conduit d'injection de matière thermoplastique dans le moule. De préférence, comme représenté sur les figures 5 et 6, les conduits 24 sont disposés en regard de cavités 12. |
| 10 | Le moule utilisé est classique. Il fonctionne soit par injection, soit par injection-compression. |
| 14 | Les perforations 14 sont obtenues classiquement grâce à un poinçon |

### Explication générale

La matière thermoplastique 24 injectée dans le moule tend à le remplir entièrement. En particulier, la matière thermoplastique 24 traverse les perforations 14 pour remplir la cavité 12. Si le débit d'injection n'est pas trop élevé, la matière thermoplastique ne déchire pas les ponts 22, et la liaison électrique entre les parties 4a et 4b de la feuille 4 est conservée.

## Revendications

1. Procédé pour réaliser une pièce (2) en matière thermoplastique (16) recouverte en surface d'une feuille connexe (4) électriquement conductrice d'épaisseur inférieure à 0,1 millimètre et comprenant au moins une nervure (6), **caractérisé par le fait qu'**il comprend les étapes suivantes :
- on dépose, sur une surface interne (8) d'un moule (10) définissant la forme de la pièce (2), la feuille (4) électriquement conductrice de manière à recouvrir au moins partiellement un orifice borgne (12) du moule (10) débouchant sur la surface interne (8) et définissant la forme de la nervure (6),
- on ménage dans la feuille (4) au moins une ouverture (14) de l'orifice (12) conformée pour permettre à de la matière thermoplastique (16) fluide de traverser l'ouverture, et pour que la feuille (4) demeure connexe, et
- on remplit le moule (10) de matière thermoplastique (16) fluide.

2. Procédé selon la revendication 1, dans lequel le remplissage du moule (10) est réalisé par injection de matière thermoplastique (16) en fusion.

3. Procédé selon la revendication 2, dans lequel la matière thermoplastique (16) en fusion est injectée à proximité de la nervure (6).

4. Procédé selon la revendication 2 ou 3, comprenant en outre une étape de compression du moule (10).

5. Procédé selon l'une quelconque des revendications précédentes, dans lequel on ménage l'ouverture (14) par perforation de la feuille (4).

6. Procédé selon la revendication 5, dans lequel on réalise des perforations (14) de la feuille régulièrement réparties à l'embouchure de l'orifice (12).

7. Procédé selon l'une quelconque des revendications précédentes, dans lequel la surface de l'ouverture est d'au moins 10 mm².

8. Procédé selon l'une quelconque des revendications précédentes, dans lequel l'ouverture de l'orifice ménagée dans la feuille est conformée de sorte que la feuille recouvre au moins partiellement l'orifice.

9. Procédé selon la revendication 8, dans lequel l'ouverture de l'orifice ménagée dans la feuille est conformée de sorte que la surface de la zone de l'orifice recouverte par la feuille est supérieure à la surface de la zone de l'orifice qui n'est pas recouverte par la feuille.

10. Pièce (2) en matière thermoplastique obtenue par mise en oeuvre d'un procédé selon l'une quelconque des revendications précédentes.

11. Pièce (2) selon la revendication 10, formant une pièce de véhicule automobile.

12. Pièce (2) en matière thermoplastique comprenant une surface externe (18) et au moins une nervure (6) en saillie de la surface (18), la base (20) de la nervure (6) étant sensiblement allongée et s'étendant selon une direction longitudinale, **caractérisée en ce que** la surface externe (18) est recouverte par une feuille (4) électriquement conductrice connexe d'épaisseur inférieure à 0,1 millimètre et comprenant :
- deux parties (4a, 4b) situées de part et d'autre de la base (20) de la nervure (6), et
- au moins un pont conducteur (22) traversant la base (20) de la nervure (6) selon une direction sensiblement transversale.

13. Pièce (2) selon la revendication 12, formant une pièce de véhicule automobile.

14. Pièce (2) selon la revendication 13, formant l'une quelconque des pièces de véhicule automobile de l'ensemble constitué par une peau de pare-choc, un renfort de peau, un absorbeur de choc, une doublure d'aile, un convergent, un déflecteur, une face avant technique, un spoiler, un hayon et son caisson, un pavillon, un capot, un rétroviseur, un passage de roue.

15. Pièce (2) selon l'une quelconque des revendications 12 à 14, dans laquelle la feuille (4) est en aluminium.
